# EUROPEAN PATENT APPLICATION

(11) **EP 1 555 249 A1**
(43) Date of publication of application: **20.07.2005**
(21) Application number: 04000701.5
(22) Date of filing: 15.01.2004
(51) Int. Cl.: C03C 17/30

(54) **Hydrophobic and/or oleophobic coating on microstructured glass surfaces providing an anti-fingerprint effect**

(71) Applicant: Nanogate Coating Systems GmbH, 66121 Saarbrücken (DE)
(72) Inventor: Hoffmann, Melanie, 66482 Zweibrücken (DE); Jonschker, Gerhard, Dr., 66583 Spiesen-Elvesrberg (DE); Overs, Michael, Dr., 66119 Saarbrücken (DE)
(74) Representative: Jönsson, Hans-Peter, Dr.Dipl.-Chem.

(57) **Abstract**

A hydrophobic and/or oleophobic coating on microstructured glass surfaces providing an anti-fingerprint effect, obtainable by using a composition providing a hydrophobic and/or oleophobic coating on microstructured glass surfaces, comprising
(a) 0.1% to 10% by weight of at least one alkylsilane conforming to the general formula 1

   SIR¹R²R³R⁴ (1)

   wherein
   R¹, R² and R³ each independently is chlorine or an organic residue containing 1 to 17 carbon atoms, 3 to 35 hydrogen atoms, 0 to 6 oxygen atoms, 0 to 31 fluorine atoms, 0 to 31 chlorine atoms, and 0 to 5 nitrogen atoms, and
   R⁴ is an organic residue containing 1 to 17 carbon atoms, 3 to 35 hydrogen atoms, 0 to 6 oxygen atoms, 0 to 31 fluorine atoms, 0 to 31 chlorine atoms, and 0 to 5 nitrogen atoms,
(b) 0.01% to 10% by weight of a reactive silicone conforming to the general formula 2

   X-(-O-SiR⁵ ₂-)ₚ-Y (2)

   wherein
   X and Y each are independently selected from the group of Cl, OH, oxime, acetoxy, O-Alkyl, O-Aryl, O⁻A⁺ (A⁺ selected from the group of alkali-, alkali earth-, amine-, ammonium-, phosphonium-, and sulphonium- ions), R⁵ residues can be same or different and independently selected from the group containing alkyl, aryl, trimethylsilyl, partially fluorinated alkyl with or without additional heteroatoms in/at the sidechain, p is an integer of 5 to 10000, and
(c) a solvent.

## Description

This invention is related to a hydrophobic and/or oleophobic coating on microstructured glass surfaces providing an anti-fingerprint effect.

Fingerprints change the visual appearance of microstructured glass. The expression "microstructured glass" includes etched or material-blasted glass, also called frosted or satinated glass, and glass surfaces prepared by sol-gel-processes or printing techniques, such like silk-screen processes. Such fingerprints reduce the frosting effect locally and add gloss as well as dark appearing spots to the glass. Typically, anti-sticking coatings, which are also termed easy-to-clean coatings, contain alkyl- or partially fluorinated alkylsilanes. Unfortunately, on frosted glass such coatings often exhibit serious drawbacks. Often, they do not inhibit carry-over of lipids and sweat of the fingers (fingerprints) sufficiently. Though fingerprints are removed more easily from the coated glass than from uncoated glass, still the cleaning of fingerprints is much more tedious than on unfrosted glass.

Currently, anti-fingerprint coatings are often implemented as viscous components, such as silicones or mineral oils, which are deposited on the substrates. These components are picked up by the finger upon touching and therefore prevent deposit of lipids or sweat from the fingers onto the substrate. The major shortcoming of such solution is the consumption of the components like silicones or mineral oils with time and therefore lifetime is an issue.

A variety of coatings has been taught in the prior art for the purpose to either provide hydrophobic and/or oleophobic coatings on glass and/or provide anti-fingerprint coatings.

WO 99/19084 A1 teaches a water based coating material comprising an alcohol as a solvent, fluorinated silanes and an acid to provide a hydrophobic coating on glass.

EP 0 799 873 B1 teaches a coating material comprising water, an alcohol, fluorinated silanes and an acid to provide a hydrophobic coating on glass.

WO 95/23804 A1 teaches a water based coating material comprising fluorinated silanes to provide a hydrophobic coating on a variety of substrates.

DE 101 35 684 A1 teaches a coating material comprising a silane for obtaining hydrophobic coatings without using additional silicones and also using preferably water as a solvent.

US 6,340,502 B1 teaches a coating material comprising a fluorinated alkoxysilane and a fluorinated halosilane for obtaining a hydrophobic coating.

EP 0 545 201 B1 teaches an article comprising a glass substrate, which is treated with silica primer layer and a perfluoroalkyl alkyl silane.

EP 1 113 064 A1 teaches a water based composition comprising a tetraalkoxysilane that may be present in the form of an oligomer, a fluoroalkylsilane, and an acid for obtaining a hydrophobic coating.

WO 03/046090 A2 teaches an anti-fingerprint coating based on waxes for metal surfaces.

WO 03/022945 A1 teaches an anti-fingerprint coating based on polymers for metal substrates.

US 5,847,876 A teaches an anti-fingerprint coating based on optical design for glass substrates, by adjusting the refractive indices of several layers such that fingerprints of the surface are not visible.

JP 11-116944 A teaches teaches hydrophobic coatings on glass using fluorinated alkylsilanes and non-reactive oily silicones having a viscosity lower than 1000 centistokes. The alkylsilane is deposited onto the glass substrate in a first step, followed by application of said silicone.

The problem of current anti-fingerprint technology on microstructured glass surfaces is the consumption of the low surface energy agent, such as silicone or mineral oil, and therefore lifetime of the coating becomes an issue. And the problem of current easy-to-clean coatings based on silanes without silicones is, that even though fingerprints are removed from said glass more easily than on uncoated glass, the hydrophobic and/or oleophobic coatings do not inhibit carry-over of lipids and sweat of the fingers (fingerprints) sufficiently.

Surprisingly, for the anti-fingerprint effect it was found that it is not necessary to transfer a silicone or mineral oil onto the finger in order to avoid fingerprints, but it is sufficient to use a polymer with sufficiently long silicone chains and sufficiently low surface energy in a substrate coating.
The problem of the underlying invention was solved by a composition providing a hydrophobic and/or oleophobic coating on microstructured glass surfaces, comprising
(a) 0.1% to 10% by weight of at least one alkylsilane conforming to the general formula 1

   SiR¹R²R³R⁴ (1)

   wherein
   R¹, R² and R³ each independently is chlorine or an organic residue containing 1 to 17 carbon atoms, 3 to 35 hydrogen atoms, 0 to 6 oxygen atoms, 0 to 31 fluorine atoms, 0 to 31 chlorine atoms, and 0 to 5 nitrogen atoms, and
   R⁴ is an organic residue containing 1 to 17 carbon atoms, 3 to 35 hydrogen atoms, 0 to 6 oxygen atoms, 0 to 31 fluorine atoms, 0 to 31 chlorine atoms, and 0 to 5 nitrogen atoms,
(b) 0.01% to 10% by weight of a reactive silicone conforming to the general formula 2

   X-(-O-SiR⁵ ₂-)ₚ-Y (2)

   wherein
   X and Y each are independently selected from the group of Cl, OH, oxime, acetoxy, O-Alkyl, O-Aryl, O⁻A⁺ (A⁺ selected from the group of alkali-, alkali earth-, amine-, ammonium-, phosphonium-, and sulphonium-ions), R⁵ residues can be same or different and independently selected from the group containing alkyl, aryl, trimethylsilyl, partially fluorinated alkyl with or without additional heteroatoms in/at the sidechain,
   p is an integer of 5 to 10000, and
(c) a solvent.

Preferably, the composition comprises:
(d) 0.1% to 5% by weight of an acid.

In this way, a copolymer may be produced comprising long silicone-chains and reactive silane residues, which react with each other and with surface-Si-OH groups of the glass to yield a long-term stable coating. Since the reactive centers for adhesion to the glass are located on the silane residues, and the silicone-chains are repelled by the partially fluorinated silanes, it is assumed that the silicone-chains are protruding the coating's surface.

Preferably the composition additionally comprises,

(e) 0.1 % to 5 % by weight of at least one silane conforming to the general formula 3

SiR⁶R⁷R⁸R⁹ (3)

wherein
R⁶, R⁷, R⁸, and R⁹ each are independently selected from the group of cyclic, linear or branched alkyl, acetoxy or alkoxy groups each containing 1 to 10 carbon atoms.

It should be understood that the residues R¹, R², R³, R⁶, R⁷, R⁸, and R⁹ might also be oxime, O-aryl, and other hydrolyzable functional groups.

To raise the boiling point of the composition and therefore preventing premature evaporation, such composition may further comprise, optionally, 20% to **90** % by weight of at least one high-boiling solvent having a boiling point above 80°C or a mixture of such solvents.

The high boiling solvents may include alcohols and ethers. An ether-alcohol with a boiling point in the range of 110°C to 130°C was found to be particularly suitable, and especially preferred to be 1-methoxy-2-propanol. This compound was found to be optimal for adjusting drying time and behavior of the applied composition to the glass surface.

The best suited solvents for said alkylsilane turned out to be protic solvents having a dielectric constant 5 < ε < 40, and a water content < 3% by weight and a boiling point in the range from 10 to 99 °C, and in particular alcohols, and especially preferred isopropanol. In the experiments, isopropanol turned out to be the best suited solvent with optimal solvent properties and visual appearance of the coating after drying.

It was found to be best for the acid (d) to be a mineral acid, and especially preferred to be sulfuric acid, which has the advantage of being nonvolatile, hygroscopic, and to have a high acid strength.

It was found to be of advantage when said alkylsilane corresponds to formula (1) comprising residues R⁴ conforming to the general formula (4)

CZ₃(CZ₂)ₙ(CH₂)ₘ-, (4)

wherein
Z is selected from the group containing H and F,
1 ≤ n ≤ 15, 1≤ m ≤ 4, and
R¹, R², and R³ each are independently selected from the group Cl or cyclic, linear or branched alkoxy groups each containing 1 to 10 carbon atoms.

Preferably, Z is F in said alkylsilane. Particularly preferable was said alkylsilane, where m = 2 and R¹, R², and R³ each are independently selected from alkoxy groups containing each from 1 to 2 carbon atoms, and especially preferred to be 3,3,4,4,5,5,6,6,7,7,8,8,8-tridecafluorooctyltriethoxysilane.

It is preferred for the reactive silicone (b) to be a hydroxy-terminated polysiloxane, since the reactive OH group can react with silanes, such that the reactive silicone can be chemically bound within the coating.

Cyclic alkanes, and in particular isohexane, are the preferred solvents for the reactive silicones.

For the reason of being commercially available and widely used in coating processes, it is preferred for the silane (e) to be selected from the group consisting of tetraethoxysilane, tetramethoxysilane and dimethyldiethoxysilane.

Said embodiment of the invention includes in particular microstructured glass surfaces with a hydrophobic and/or oleophobic coating obtainable by cleaning said substrate, applying a composition conforming to above definition to said substrate and drying said substrate.

It is preferred for said coated glass surface to be material-blasted by using sand, glass beads or quarz, since these are the most commonly available materials for this process.

Further, it is preferred for the coating technique to be selected from the group of spray coating, polishing, curtain coating, dip coating and roller coating, since these are the most commonly available coating processes for this type of application.

Naturally, said surfaces also exhibit an easy-to-clean effect, as it is typical for other hydrophobic coatings on glass as well.

It should be understood that this description of the invention does not preclude chemical interactions among the components listed, but instead describes the components of a composition according to the invention in the form in which they are originally used as ingredients to prepare such a composition.

### Examples:

The glass surfaces were cleaned using common scouring milk/isopropanol before coating. Coating was performed on the fireside of the substrates. After addition of each component to the reaction mixture, the reaction mixture was stirred. Following product names and abbreviations were used in the text and shall be introduced hereby:

| | |
|---|---|
| Dowanol™ PM: | ether-alcohol by DOW (mostly propylene glycol methyl ether) |
| TMOS | tetramethoxysilane |
| DMDEOS | dimethyldiethoxysilane |
| TEOS | tetraethoxysilane |
| Silopren™ C10 | hydroxy-terminated polysiloxane by GE-Bayer-Silicones |

Visual appearance was determined by the human eye. Criteria for this test include transparency, clarity, cloudiness, veil formation, and light scattering.

Hydrophobicity was evaluated by contact angle (CA) measurement against demineralized water in air. Unless otherwise stated, said contact angle was determined by dynamic advancing contact angle measurements using a Kruss® instrument.

The anti-fingerprint effect was determined by dipping a finger into regular salad-oil, briefly drying the finger with a regular paper towel and pressing the finger briefly onto the substrate. The visual appearance of the fingerprint and its cleanability was determined by wiping with a regular paper towel.

The results of the following examples are given in Table 1.

### Example 1:

Synthesis of the solution, which was used to treat glass surfaces to yield an anti-fingerprint effect
20 g sulfuric acid were added to 3500 g isopropanol and 850 g Dowanol™ PM. After a brief period of stirring, 130 g 3,3,4,4,5,5,6,6,7,7,8,8,8-tridecafluorooctyltriethoxysilane and 12 g TMOS were added to the reaction mixture. As a last step, 15 g Silopren™ C10 was added after it was predissolved in 1400 g isohexane. The mixture was stirred for 30 min after the last addition.

### Example 2:

The use of the solution as described in example 1 for preparing an anti-fingerprint coating on etched glass surfaces
The solution as described in example 1 was polished onto an etched glass substrate with a dimension of DINA4 using a microfiber sponge in two quick passes, each time using 2 ml of solution. The treated glass surfaces were allowed to dry overnight at room temperature.

### Example 3:

Using different fluorinated or partially fluorinated silanes does not have a significant impact on the performance of the anti-finterprint coating
a) Following substances were added to the reaction vessel in the order of mention to give solution A: 50 g isopropanol, 0.2 g sulfuric acid, 2.0 g 1H,1'H,2H,2'H-heptadecafluorodecyltrimethoxysilane, 0.05 g Silopren™ C10, which was predissolved in 30 g isohexane, and 0.2 g TMOS.
b) Following substances were added to the reaction vessel in the order of mention to give solution B: 50 g isopropanol, 0.3 g sulfuric acid, 2 g 3,3,4,4,5,5,6,6,7,7,8,8,8-tridecafluorooctyltriethoxysilane, 0.05 g Silopren™ C10, which was predissolved in 30 g isohexane, and 0.2 g TMOS.

Solutions a) and b) were stirred for additional 15 min. and then applied to glass substrates (10 x 10 cm) using polypropylene/cellulose composite wiper in two 30 s passes using 0.25 ml material for each pass. The glass substrates were then stored overnight at room temperature.

### Example 4:

Using non-fluorinated alkylsilanes results in sufficient anti-fingerprint coatings
0.6 g sulfuric acid was added to 120 g isopropanol and 29 g Dowanol™ PM. After a brief period of stirring, 1.4 g octyltriethoxysilane and 0.4 g TMOS were added to the reaction mixture. As a last step, 0.5 g Silopren™ C10 was added after it was predissolved in 48 g isohexane. The mixture was stirred for 30 min after the last addition.
The solution was stirred for an additional 15 min. and then applied to glass substrates (10 x 10 cm) using polypropylene/cellulose composite wiper in two 20 s passes using 1.5 ml material for each pass. The glass substrates were then stored overnight at room temperature.

### Comparative Example 1:

Using silicone rubbers such as Silopren™ C10 instead of conventional silane chemistry (e.g. TEOS, TMOS, DMDEOS, ...) prevents veil formation in the resulting coating.
Following substances were added to the reaction vessel in the order of mention: 80 g isopropanol, 0.3 g sulfuric acid, 0.3 g 1H,1'H,2H,2'H-heptadecafluorodecyltrimethoxysilane, 0.1 g DMDEOS, 0.3 g n-octadecylmethyldiethoxysilane, 0.4 g methyltriethoxysilane, and 0.15 g TMOS.

The solution was stirred for additional 10 min. and then applied to glass substrates (10 x 10 cm) using polypropylene/cellulose composite wiper in two 30 s passes using 0.25 ml material for each pass. The glass substrates were then stored overnight at room temperature.

**Table 1**

| shows relevant results of above examples (CA = contact angle): | | | |
|---|---|---|---|
| **Example** | **CA** | **Visual appearance** | **Anti-fingerprint effect** |
| 2 | 109° | clear | good |
| 3a | 115° | clear | good |
| 3b | 110° | clear | good |
| 4 | 105° | clear | sufficient |
| Comp. 1 | 97° | veil formation | insufficient |

## Claims

1. A composition providing a hydrophobic and/or oleophobic coating on microstructured glass surfaces, comprising
(a) 0.1% to 10% by weight of at least one alkylsilane conforming to the general formula 1
SiR¹R²R³R⁴ (1)
wherein
R¹, R² and R³ each independently is chlorine or an organic residue containing 1 to 17 carbon atoms, 3 to 35 hydrogen atoms, 0 to 6 oxygen atoms, 0 to 31 fluorine atoms, 0 to 31 chlorine atoms, and 0 to 5 nitrogen atoms, and
R⁴ is an organic residue containing 1 to 17 carbon atoms, 3 to 35 hydrogen atoms, 0 to 6 oxygen atoms, 0 to 31 fluorine atoms, 0 to 31 chlorine atoms, and 0 to 5 nitrogen atoms,
(b) 0.01% to 10% by weight of a reactive silicone conforming to the general formula 2
X-(-O-SiR⁵ ₂-)ₚ-Y (2)
wherein
X and Y each are independently selected from the group of Cl, OH, oxime, acetoxy, O-Alkyl, O-Aryl, O⁻A⁺ (A⁺ selected from the group of alkali-, alkali earth-, amine-, ammonium-, phosphonium-, and sulphonium-ions), R⁵ residues can be same or different and independently selected from the group containing alkyl, aryl, trimethylsilyl, partially fluorinated alkyl with or without additional heteroatoms in/at the sidechain,
p is an integer of 5 to 10000, and
(c) a solvent.

2. The composition according to claim 1, additionally comprising:
(d) 0.1% to 5% by weight of an acid,

3. The composition of claim 1, additionally comprising:
(e) 0.1 % to 5% by weight of at least one silane conforming to the general formula 3
SiR⁶R⁷R⁸R⁹ (3)
wherein
R⁶, R⁷, R⁸, and R⁹ each are independently selected from the group of cyclic, linear or branched alkyl, acetoxy or alkoxy groups each containing 1 to 10 carbon atoms.

4. The composition according to claim 1, wherein said alkylsilane corresponding to formula (1) comprises residues R⁴ conforming to the general formula (4)
CZ₃(CZ₂)ₙ(CH₂)ₘ-, (4)
wherein
Z is selected from the group containing H and F,
1 ≤ n ≤ 15, 1 ≤ m ≤4, and
R¹, R², and R³ each are independently selected from the group Cl or cyclic, linear or branched alkoxy groups each containing 1 to 10 carbon atoms.

5. The composition according to claim 4, wherein Z is F.

6. The composition according to claim 4, wherein R¹, R², and R³ are independently selected from alkoxy groups each containing each from 1 to 2 carbon atoms and m = 2.

7. The composition according to claim 4, wherein component (a) is 3,3,4,4,5,5,6,6,7,7,8,8,8-tridecafluorooctyltriethoxysilane.

8. The composition according to claim 1, wherein component (b) is a hydroxy-terminated polysiloxane.

9. The composition according to claim 1, wherein component (c) contains water.

10. The composition according to claim 2, wherein component (d) is a mineral acid, in particular sulfuric acid.

11. The composition according to claim 3, wherein component (e) is selected from the group consisting of tetraethoxysilane, tetramethoxysilane and dimethyldiethoxysilane.

12. Microstructured glass surface with a hydrophobic and/or oleophobic coating obtainable by cleaning said substrate, applying a composition conforming to any one of claims 1 to 11 to said substrate and drying said substrate.

13. The glass surface according to claim 12, the surface being treated by material-blasting by using sand, glass beads or quarz prior to the application.
